# FASCICULE DE BREVET EUROPEEN

(11) **EP 1 011 216 B1**
(45) Date de publication et mention de la délivrance du brevet: **18.02.2004**
(21) Numéro de dépôt: 99403086.4
(22) Date de dépôt: 09.12.1999
(51) Int. Cl.: H04B 10/158

(54) **Système de transmission à fibre optique comprenant un filtre de réception de largeur de bande variable**
Faseroptisches Übertragungssystem mit einem Empfangsfilter, der abstimmbare Bandbreite hat
Optical fiber transmission system including a reception filter with tunable bandwidth

(30) Priorité: 14.12.1998 FR 9815746
(43) Date de publication de la demande: 21.06.2000
(73) Titulaire: ALCATEL, 75008 Paris (FR)
(72) Inventeur: Brandon, Eric, 92340 Bourg La Reine (FR)
(74) Mandataire: Lamoureux, Bernard

(56) Documents cités:
- EP-A- 0 948 151
- JOERGENSEN C G ET AL: "HIGH SENSITIVITY FIBRE PREAMPLIFIER RECEIVER FOR MULTICHANNEL APPLICATIONS" ELECTRONICS LETTERS, vol. 27, no. 23, 7 novembre 1991 (1991-11-07), pages 2153-2155, XP000268353 ISSN: 0013-5194
- PAWLOWSKI AND AL.: "VARIABLE BANDWIDTH AND TUNABLE CENTER FREQUENCY FILTER USING TRANSVERSAL-FORM PROGRAMMABLE OPTICAL FILTER" ELECTRONIC LETTERS, vol. 32, no. 2, 18 janvier 1996 (1996-01-18), pages 113-114, XP002113856
- GABLA P M LECLERC E ET AL: "PRACTICAL IMPLEMENTATION OF A HIGHLY SENSITIVE RECEIVER USING AN ERBIUM-DOPED FIBER PREAMPLIFIER" IEEE PHOTONICS TECHNOLOGY LETTERS, vol. 3, no. 8, 1 août 1991 (1991-08-01), pages 727-729, XP000223741 ISSN: 1041-1135
- CAPMANY J ET AL: "FIBRE OPTIC BANDPASS FILTER WITH SUBPICOMETRE BANDWIDTH USING A FIBRE GRATING AND TWO FIBRE FABRY-PEROT FILTERS" ELECTRONICS LETTERS, vol. 33, no. 23, 6 novembre 1997 (1997-11-06), pages 1970-1972, XP000773535 ISSN: 0013-5194

## Description

La présente invention concerne le domaine des systèmes de transmission par fibres optiques. Elle concerne plus particulièrement le filtre de réception de tels systèmes de transmission.

L'invention s'applique aux systèmes de transmission avec ou sans répéteurs. Les systèmes de transmission ou liaisons dits "sans répéteurs" sont caractérisés par le fait qu'ils n'utilisent des éléments électriquement actifs que dans les terminaux d'extrémité. A l'inverse, les systèmes avec répéteurs présentent des éléments électriquement actifs, tels que des répéteurs avec des amplificateurs.

Les liaisons par fibre optique sans répéteurs présentent la particularité de nécessiter, pour atteindre de grandes distances, l'injection dans la fibre optique de très fortes puissances optiques. Deux types d'ondes optiques sont injectés dans la fibre. Le premier type est l'onde de signal, à environ 1550 nm, qui est modulée et porte l'information à transmettre. Le deuxième type d'onde optique est l'onde optique dite de pompe, dans la plage de longueur d'onde 1400-1500 nm, qui est une puissance continue injectée dans la fibre optique, de façon à amplifier le signal.

En réception, ces systèmes présentent un filtre de réception étroit, qui permet de filtrer le signal sans avoir à traiter le bruit dans la liaison. On considère généralement que l'étroitesse du filtre de réception est indispensable au bon fonctionnement d'une liaison sans répéteurs, et que la sensibilité de la liaison est d'autant plus grande que la largeur du filtre est proche de la limite théorique que constitue la largeur du spectre du signal émis.

L'utilisation de tels filtres présente des contraintes. D'une part, les filtres présentent des pentes raides, et sont coûteux. D'autre part, un décalage de la longueur d'onde de l'émetteur est toujours possible, de sorte que la plupart des récepteurs comprennent des filtres de réception dont la longueur d'onde est asservie sur la longueur d'onde de l'émetteur. Une solution simple pour asservir la longueur d'onde du filtre de réception consiste à mesurer la puissance reçue en sortie du filtre de réception.

EP-A-0 714 182 décrit un système de transmission à répéteurs à multiplexage en longueurs d'onde, dans lequel plusieurs longueurs d'ondes distinctes peuvent être utilisées. Ce document propose en conséquence de prévoir en réception une pluralité de filtres et un détecteur; le signal reçu sur le récepteur est amplifié puis démultiplexé pour être envoyé vers des récepteurs. Pour démultiplexer le signal, ce document propose d'utiliser des filtres dont la longueur d'onde centrale est réglable.

US-A-5 469 288 décrit un filtre de réception pour un système de transmission à multiplexage en longueur d'onde, réglable de sorte à permettre de suivre en réception les variations de longueurs d'onde à l'émission. Ce document propose d'utiliser pour chaque longueur d'onde deux filtres en cascade, qui présentent des largeurs différentes, et une longueur d'onde centrale identique. La combinaison des deux filtres permet autour de la longueur d'onde d'un canal, d'atténuer fortement les puissances des signaux provenant des canaux suivants.

L'article de C. G. Jorgensen et al, 'High sensitivity fibre preamplifier receiver for multichannel applications', Electronics Letters, vol. 27, no 23, 7 novembre 1991, décrit un filtre de réception dont la bande passante est contrôlable en fonction du photocourant reçu.

L'article de E. Pawlowski et al, 'Variable bandwidth and tunable center frequency filter using transversal-form programmable optical filter', Electronics Letters, vol. 32, no 2, 18 janvier 1996, décrit un filtre à largeur de bande variable et à longueur d'onde centrale réglable.

Il est recherché, notamment dans les systèmes sans répéteurs, d'utiliser de très fortes puissances de signal et de pompe (de l'ordre de grandeur du Watt) afin de permettre l'augmentation de la portée de la liaison. Cependant, la puissance de signal et la puissance de pompe qui peuvent être injectées sont limitées par plusieurs effets non-linéaires, notamment l'effet Brillouin, l'effet Kerr et l'effet Raman. Ces effets sont décrits dans l'ouvrage de G.P. Agrawal, Nonlinear Fibre Optics, Academic Press 1980. Ces effets non linéaires peuvent altérer le spectre du signal émis, et notamment l'élargir; se posent alors des problèmes en réception. Ainsi, à titre d'exemple, une valeur de l'ordre de 18 dBm constitue la puissance maximale dans une liaison à 2,5 Gbit/s classique.

L'invention propose une solution permettant d'augmenter la sensibilité en réception d'une liaison, et notamment d'une liaison sans répéteurs.

Plus précisément, l'invention propose un système de transmission à fibres optiques présentant un filtre de réception de largeur réglable et un moyen pour ajuster la largeur de ce filtre en fonction d'un paramètre du signal reçu.

Avantageusement, le filtre de réception présente une longueur d'onde centrale réglable.

Dans un mode de réalisation, le filtre de réception comprend au moins deux filtres en cascade, l'un au moins des deux filtres présentant une longueur d'onde centrale réglable.

De préférence, le filtre de réception comprend deux filtres identiques.

Le filtre peut avantageusement comprendre au moins un filtre de Bragg accordable en longueur d'onde.

Dans un mode de réalisation, le système ne présente pas de répéteurs.

Dans un autre mode de réalisation, la largeur du filtre de réception est asservie sur un nombre d'erreurs à corriger d'un code correcteur d'erreurs.

La largeur du filtre de réception peut aussi être asservie sur la puissance du signal reçu sur le filtre de réception et filtré.

D'autres caractéristiques et avantages de l'invention apparaîtront à la lecture de la description qui suit de modes de réalisation de l'invention, donnée à titre d'exemple et en référence aux dessins annexés, qui montrent
- figure 1 la fonction de transfert d'un filtre selon l'invention;
- figure 2, un graphe de la largeur de bande d'un filtre selon l'invention.

L'invention propose, dans un système de transmission à fibres optiques avec ou sans répéteurs, de prévoir un filtre de réception de largeur réglable et un moyen pour ajuster la largeur de ce filtre en fonction d'un paramètre du signal reçu. Elle permet ainsi d'augmenter la sensibilité de la liaison, en adaptant la largeur du filtre de réception, en fonction du signal reçu.

L'invention permet une adaptation du filtre de réception, en modifiant la largeur de bande du filtre de réception, permettant ainsi une adaptation du filtre à la nature du signal reçu. Avantageusement, l'invention propose en outre de régler ou asservir la longueur d'onde du filtre.

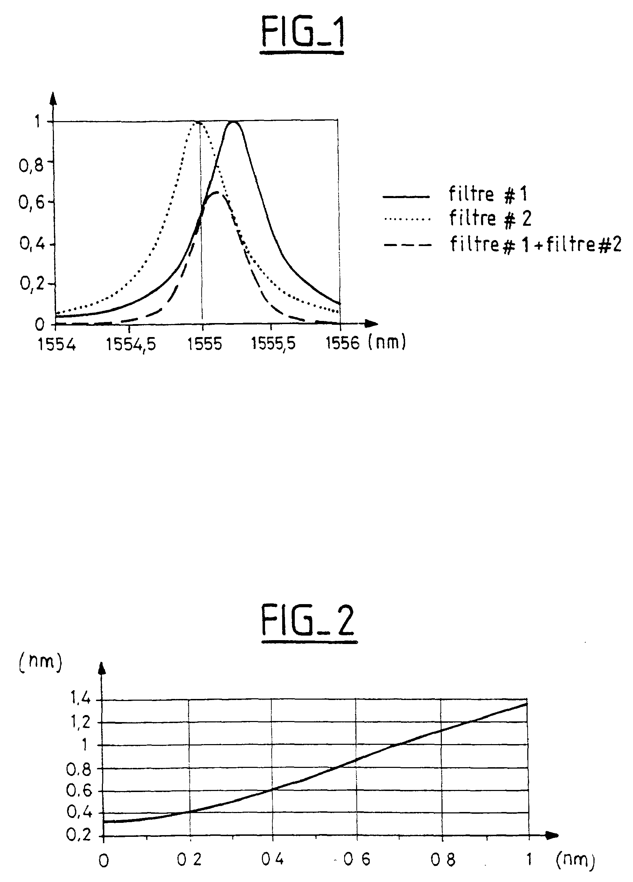

Pour obtenir un filtre de largeur variable, une solution est d'associer plusieurs filtres de longueur d'onde centrale réglables. Le choix des longueurs d'onde des filtres permet de changer la forme du filtre total. La figure 1 montre la fonction de transfert d'un tel filtre, qui est formé de la mise en cascade de deux filtres lorentziens; dans l'exemple de la figure, il s'agit de deux filtres de Fabry-Perot, montés en cascade. Le filtre total présente une forme qui peut être adaptée par le réglage de la longueur d'onde de chacun des filtres élémentaires qui le composent.

La figure montre en abscisses la longueur d'onde en nanomètres, et en ordonnées la transmission. Est représentée en trait plein la fonction de transfert du premier filtre, en traits pointillés la fonction de transfert du deuxième filtre, et en traits gras la fonction de transfert du filtre complet formé de la cascade des deux filtres. Dans l'exemple de la figure, le premier filtre présente une longueur d'onde centrale à 1555 nm, et le second filtre une longueur d'onde centrale à 1555,25 nm. Chacun des filtres présente un largeur à -3 dB de 0,5 nm. Le filtre résultant présente une largeur à -3 dB de l'ordre de 0,4 nm dans l'exemple de la figure.

La figure 2 montre, pour un filtre du genre de celui de la figure 1, un graphe de la largeur de bande passante, en fonction de l'écartement entre les longueurs d'ondes des deux filtres. Les abscisses donnent l'écartement en nanomètres entre les longueurs d'onde centrales des filtres, et les ordonnées la largeur de la bande passante à -3 dB pour le filtre résultant. On constate que la largeur du filtre cascadé est une fonction croissante de l'écartement entre les longueurs d'onde centrales des filtres montés en cascade. On peut atteindre des largeurs à -3 dB supérieures à 1 nm, en prenant des filtres espacés de 1 nm. Le filtre résultant présente encore une fonction de transfert qui lui permet d'être utilisé comme filtre de réception dans un système de transmission à fibres optiques.

On peut aussi utiliser pour la mise en oeuvre de l'invention d'autres types de filtres que ceux décrits en référence aux figures 1 et 2, et par exemple par commutation entre des filtres de largeurs différentes. On pourrait encore utiliser un ou plusieurs filtres de Bragg accordé longueur d'onde de façon électrique ou thermique.

Pour régler la largeur du filtre de réception selon l'invention, on peut prévoir une boucle à rétroaction, utilisant la mesure d'un code correcteur d'erreur utilisé dans le système de transmission. Dans une telle solution, la largeur de bande du filtre de réception est asservie sur le nombre d'erreurs qui doivent être corrigées. On arrive de la sorte à adapter pratiquement en temps réel la forme du filtre de réception au signal reçu.

Une autre méthode consiste à mesurer le rapport signal à bruit à l'entrée du récepteur optique et à optimiser ce rapport en ajustant la largeur du filtre utilisé en réception. On peut, par exemple, mesurer la puissance de la partie du signal reçue mais filtrée par le filtre de réception, par simple différence entre la puissance avant et après le filtre, et en tenant compte le cas échéant de l'atténuation du filtre. Cette puissance peut aussi être utilisée dans une boucle à rétroaction pour contrôler la largeur des filtres.

Avantageusement, on peut aussi régler ou asservir la longueur d'onde centrale du filtre "total" de largeur variable ainsi obtenu. Ceci améliore encore les résultats de l'invention. On peut pour un tel asservissement, utiliser les mêmes techniques que celles mentionnées plus haut pour l'asservissement de la largeur du filtre.

L'invention s'applique de façon particulièrement avantageuse à un système de transmission sans répéteurs, dans lequel elle permet une augmentation du facteur de qualité.

Elle s'applique aussi à des systèmes de transmission avec répéteurs, dans lesquels elle permet aussi un réglage plus simple des filtres de réception.

## Revendications

1. Un système de transmission à fibres optiques présentant un filtre de réception de largeur de bande réglable et des moyens pour ajuster la largeur de bande dudit filtre en fonction d'un paramètre du signal reçu.

2. Le système selon la revendication 1, **caractérisé en ce que** le filtre de réception présente une longueur d'onde centrale réglable.

3. Le système selon la revendication 1 ou 2, **caractérisé en ce que** le filtre de réception comprend au moins deux filtres en cascade, l'un au moins des deux filtres présentant une longueur d'onde centrale réglable.

4. Le système selon la revendication 3, **caractérisé en ce que** le filtre de réception comprend deux filtres identiques.

5. Le système selon la revendication 1, 2, 3 ou 4, **caractérisé en ce que** le filtre de réception comprend au moins un filtre de Bragg accordable en longueur d'onde.

6. Le système selon la revendication 1, 2, 3 ou 4, **caractérisé en ce qu'**il ne présente pas de répéteurs.

7. Le système selon l'une des revendications 1 à 6, **caractérisé en ce que** la largeur du filtre de réception est asservie sur un nombre d'erreurs à corriger d'un code correcteur d'erreurs.

8. Le système selon l'une des revendications 1 à 6, **caractérisé en ce que** la largeur du filtre de réception est asservie sur la puissance du signal reçue sur le filtre de réception et filtré.

## Claims

1. An optical fiber transmission system having a receive filter of variable bandwidth and means for adjusting the bandwidth of said filter as a function of a parameter of the received signal.

2. The system according to claim 1, **characterized in that** the receive filter has an adjustable center wavelength.

3. The system according to claim 1 or 2, **characterized in that** the receive filter comprises at least two filters in cascade, at least one of the two filters having a center wavelength that is adjustable.

4. The system according to claim 3, **characterized in that** the receive filter comprises two identical filters.

5. The system according to claim 1, 2, 3, or 4, **characterized in that** the receive filter comprises at least one wavelength-tunable Bragg filter.

6. The system according to claim 1, 2, 3, or 4, **characterized in that** it does not include repeaters.

7. The system according to any one of claims 1 to 6, **characterized in that** the width of the receive filter is servo-controlled to the number of errors to be corrected in an error correcting code.

8. The system according to any one of claims 1 to 6, **characterized in that** the width of the receive filter is servo-controlled on the power of the signal as received by the receive filter and as filtered.

## Patentansprüche

1. Faseroptisches Übertragungssystem mit einem Empfangsfilter, der eine abstimmbare Bandbreite hat, und Elemente, um die Bandbreite des genannten Filters in Abhängigkeit von einem Parameter des empfangenen Signals einzustellen.

2. System nach Anspruch 1, **dadurch gekennzeichnet, dass** der Empfangsfilter eine abstimmbare, mittlere Wellenlänge besitzt.

3. System nach Anspruch 1 oder 2, **dadurch gekennzeichnet, dass** der Empfangsfilter mindestens zwei, in Reihe geschaltete Filter besitzt, wobei mindestens einer der beiden Filter eine abstimmbare, mittlere Wellenlänge hat.

4. System nach Anspruch 3, **dadurch gekennzeichnet, dass** der Empfangsfilter zwei identische Filter aufweist.

5. System nach einem der vorhergehenden Ansprüche, **dadurch gekennzeichnet, dass** der Empfangsfilter mindestens einen Bragg-Filter besitzt, der in der Wellenlänge abstimmbar ist.

6. System nach Anspruch 1, 2, 3 oder 4, **dadurch gekennzeichnet, dass** es keine Repeater besitzt.

7. System nach einem der vorhergehenden Ansprüche, **dadurch gekennzeichnet, dass** die Bandbreite des Empfangsfilters einer Anzahl von Fehlern untergeordnet ist, die von einem Fehlerkorrektur-Code korrigiert werden.

8. System nach einem der Ansprüche 1 bis 6, **dadurch gekennzeichnet, dass** die Bandbreite des Empfangsfilters der Leistung des am Empfangsfilter empfangenen und gefilterten Signals untergeordnet ist.
